(19) Europäisches Patentamt / European Patent Office / Office européen des brevets

(11) **EP 3 014 020 B1**

(12) **EUROPEAN PATENT SPECIFICATION**

(45) Date of publication and mention
of the grant of the patent:
**25.07.2018 Bulletin 2018/30**

(21) Application number: **14735647.1**

(22) Date of filing: **25.06.2014**

(51) Int Cl.:
*D21H 27/00* (2006.01)     *D04H 1/4218* (2012.01)
*D04H 1/4242* (2012.01)     *D04H 1/435* (2012.01)
*D04H 13/00* (2006.01)     *D21H 13/24* (2006.01)
*D21H 13/40* (2006.01)     *D21H 13/50* (2006.01)
*D21H 15/12* (2006.01)     *D21H 21/52* (2006.01)
*B32B 3/12* (2006.01)     *C08J 5/24* (2006.01)

(86) International application number:
**PCT/GB2014/051934**

(87) International publication number:
**WO 2014/207456 (31.12.2014 Gazette 2014/53)**

(54) **DISSIPATION OF STATIC ELECTRICITY**

**ABLEITUNG VON STATISCHER ELEKTRIZITÄT**

**DISSIPATION D'ÉLECTRICITÉ STATIQUE**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **25.06.2013 GB 201311261**

(43) Date of publication of application:
**04.05.2016 Bulletin 2016/18**

(73) Proprietors:
• **Technical Fibre Products Limited**
**Kendal, Cumbria LA9 6PZ (GB)**
• **Tods Aerospace Limited**
**Crewkerne Somerset TA18 7HQ (GB)**

(72) Inventors:
• **JESCHKE, Michael**
**Ulverston**
**Cumbria LA12 0DX (GB)**
• **CONWAY, David**
**Dorchester**
**Dorset DT2 8BW (GB)**
• **AUSTIN, Andrew Nicholas**
**Kendal**
**Cumbria, LA8 9BU (GB)**

(74) Representative: **Cawley, Aimee Elizabeth et al**
**Marks & Clerk LLP**
**1 New York Street**
**Manchester M1 4HD (GB)**

(56) References cited:
EP-A1- 1 139 471     WO-A2-2012/159608
US-A- 4 534 886     US-A- 6 086 975
US-A1- 2009 107 620

**EP 3 014 020 B1**

**Description**

The present invention relates to the dissipation of static electricity and has particular (but not exclusive) application to the formation of parts and components (herein referred generically as components) which are used in contact with, or in the vicinity of, flammable fluids (e.g. liquids, gases and vapours) and in which static electricity may be generated so that safe dissipation thereof is required to prevent a spark that could ignite the flammable liquid. Examples of such components include those that come into contact with flammable liquids in an aircraft, e.g. fuel tanks, oil and hydraulic fluid reservoirs, and fuel, oil and hydraulic fluid lines.

The discharge of an electric charge in components within aircraft structures can occur in a number of ways. Thus, for example, components that are in contact with liquid acquire an induced static charge due to the movement of the liquid. Alternatively, a charge may be generated in the component as a result of a lightning strike on the exterior of the aircraft. Whatever its cause, the discharge in a component of an aircraft that comes into contact with (or is in the vicinity of) a flammable liquid is a serious problem due to the possibility of the discharge igniting the flammable liquid, with potentially disastrous consequences.

The management of electrical discharge and lighting for composite aircraft is more complex than that associated with aircraft constructed traditionally of metal.

Many modern aircraft (e.g. new generation airliners as manufactured by companies such as Boeing and Airbus) make extensive use in their construction of components formed of composite materials which provide both strength and lightness.

The problem is generally overcome by constructing components that come into contact with flammable liquid from metal, these components being subject to bonding and grounding schemes to ensure that the aircraft is resistant to lighting strike whilst static charge is readily dissipated. There is however a "penalty" associated with this solution in terms of the weight of such components, it being appreciated that weight is a major factor in aircraft design.

Composite parts and components are generally prepared from so-called "pre-pregs" which are comprised of composite fibres (e.g. glass fibres) impregnated with a curable resin system (e.g. a curable epoxy resin), the "pre-preg" being converted to the finished part or component by a forming operation such as moulding and subsequent curing of the resin. However such components formed of composite materials are either glass based and are insulators and not capable of dissipating static electricity or carbon based and too conductive to resist lightning strike. In principle, these disadvantages could be avoided for glass based materials by incorporating conductive fillers into the "pre-preg" so as to render the material sufficiently conductive for static dissipation but sufficiently insulating to resist lightning strike. However the control of the required band of electrical conductivity/resistivity using conductive fillers is not necessarily a practical option. More particularly, all "pre-preg" used for aerospace applications must be "qualified" (i.e. certified to a particular standard). Incorporation of filler materials into a qualified "unfilled pre-preg" would invalidate the qualification of that "pre-preg". For this reason, components of aircraft for which static dissipation is required still tend to be constructed of metal even though there is a weight disadvantage associated therewith.

It is therefore an object of the present invention to obviate or mitigate the abovementioned disadvantages. In its broadest aspects, the present invention relates to a sheet material capable of controlling the electrical properties of composite components (preferably but not exclusively components for use in aircraft) to a narrow band and hence their static dissipation properties and also to laminar structures which comprise an insulating substrate and a layer of the sheet material incorporated in to at least one surface of the substrate, all as detailed more fully below. Further aspects of the invention relate to methods of producing the sheet material and methods of producing the laminar structures.

According to a first aspect of the present invention there is provided a sheet material for use in static dissipation applications, said sheet material comprising conductive staple fibres and a cross-linked binder system that bonds said fibres together wherein the conductive staple fibres have a length in the range of 3 to 50 mm, have a resistance of $1 \times 10^3$ to $10 \times 10^{10}$ ohm/cm and are randomly oriented and wherein the sheet material has a sheet resistance of 50 ohms/sq to $50 \times 10^7$ ohms/sq.

As indicated, sheet materials in accordance with the first aspect of the invention have a sheet resistance in the range of 50 ohms/sq to $50 \times 10^7$ ohms/sq. For the purposes of the present invention, the sheet resistance of the material is as measured on a sample thereof that is incorporated as an immobilised surface layer of a construct having an insulating (i.e. non-electrically conducting) substrate layer incorporating a cured resin system, the material being incorporated as the surface layer *in situ* during formation of the construct with application of pressure (to bond the material to the substrate layer) and curing of the resin.

The sheet material in such a construct is in an immobilised, non-compressible form and is to be contrasted with the free material which is likely to be compressed by the use of pointed probes as conventionally used in the measurement of sheet resistance, such compression potentially resulting in inaccurate measurement of resistance particularly in view of the high resistance values of the materials.

For the purposes of measuring the sheet resistance of the sheet material incorporated in a construct, it is convenient for the sheet material to be of rectangular having a width W and for the construct further to incorporate two parallel strips of carbon fabric, one at each end of the rectangular sheet material and extending across the width thereof such that the distance between the adjacent edges of the two strips is L.

A potential difference, suitably of 500 volts D.C., is established between the carbon fabric strips (which serve as electrodes) and the resistance of the sheet material is measured using sharp probes. The sheet resistance, $R_s$ is calculated from the measured resistance R (average of 5 values) by the formula:

$$R_s = R \times \frac{W}{L}$$

in units of ohms per square, i.e. ohms/sq.

For the purpose of producing the construct, the insulating substrate may be produced from a pre-preg comprised of glass fibre and a curable epoxy resin Formation of the construct may be effected using techniques as conventionally employed in the construction of components from pre-pregs.

A particular technique for forming the construct and determining the sheet resistance is disclosed in Appendix 1.

The sheet material in accordance with the first aspect of the invention has, by virtue of being comprised of conducting staple fibres bonded together by a cross-linked binder system and having a sheet resistance (measured as described) of 50 ohms/sq to $5 \times 10^7$ ohms/sq, the required electrical properties for static dissipation. Below 50 ohms/sq the sheet material is too conductive for dissipation of static electricity, particularly in the preferred applications of the material in aircraft (see also below) since the conductivity of the material may adversely effect other systems on the aircraft, e.g. lightening strike protection on the outside of the aircraft. If the sheet resistance is above $5 \times 10^7$ ohms/sq then the material has too high a resistance and is insufficiently conducting for dissipation of static electricity. More preferably, the sheet material has a resistance of $1 \times 10^3$ ohms/sq to $3 \times 10^7$ ohms/sq, more preferably $1 \times 10^4$ ohms/sq to $1 \times 10^7$ ohms/sq, even more preferably $1 \times 10^5$ ohms/sq to $1 \times 10^7$ ohms/sq and most preferably $1 \times 10^5$ ohms/sq to $5 \times 10^6$ ohms/sq.

In a particularly preferred embodiment of the invention, the staple fibres are randomly oriented in the sheet material since such randomly oriented staple fibres ensures that the sheet material has isotropic resistance values. Thus, for the case where the sheet material is manufacture as a continuous web (see *infra*), the sheet material has isotropic resistance values in the machine and cross-directions. This is contrast to the use of continuous fibres which are unidirectional in nature and therefore unable to provide isotropic resistance values for the sheet material. We do however preclude the possibility that the staple fibres have at least some degree of orientation within the sheet material for imparting isotropic properties thereto.

In a particular preferred embodiment of the invention, the sheet material comprises an admixture of conducting and non-conducting staple fibres bonded together by the cross-linked binder system. The use of a blend of conducting and non-conducting staple fibres has the advantage that resistance of the sheet material varies less markedly with basis weight as compared to the case where the sheet material is comprised only of staple conducting fibres. More particularly, in the case of sheet materials in which all the staple fibres are conducting small variations in basis weight (of the sheet material) can produce relatively large changes in resistance. In contrast, sheet materials in accordance with the invention comprised of a blend of conducting and non-conducting staple fibres provide for more gradual variations in resistance with change in basis weight.

According to a second aspect of the present invention there is provided a laminar structure comprising an insulating substrate and a layer of sheet material comprising conductive staple fibres and a cross-linked binder system that bonds said fibres together incorporated into a surface of said substrate, said sheet material having a sheet resistance *in situ* on the substrate of 50 ohms/sq to $5 \times 10^7$ ohms/sq. More preferably, the sheet resistance of the sheet material *in situ* on the substrate is $1 \times 10^3$ ohms/sq to $3 \times 10^7$ ohms/sq, more preferably $1 \times 10^4$ ohms/sq to $1 \times 10^7$ ohms/sq, even more preferably $1 \times 10^5$ ohms/sq to $1 \times 10^7$ ohms/sq and most preferably $1 \times 10^5$ ohms/sq to $5 \times 10^6$ ohms/sq.

Laminar structures in accordance with the second aspect of the invention have resistance characteristics (as provided by the sheet material incorporated in the surface of the substrate) rendering them suitable for use in static dissipation applications and may be used as components in applications where static electricity is generated in the component and must be safely dissipated for which purpose it has previously been necessary to produce such components of metal, e.g. for the reasons outlined above. For the reasons indicated above, preferred sheet materials for use in the second aspect of the invention comprise an admixture of conducting and non-conducting staple fibres since such sheet materials make it easier to produce composite materials with controlled resistance characteristics than sheet materials in which all staple fibres are conducting.

For use in static dissipation applications, the laminar structure will be electrically grounded so that static electricity generated in the laminar structure may be safely discharged. Therefore according to a third aspect of the present invention there is provided a static electricity dissipation assembly associated with an electrical conductor in electrical contact with the sheet material layer of the laminar structure, said conductor also being for connection to an earthing point grounding the laminar structure so that any static charge developed therein is safely discharged to earth.

For the purposes of electrical contact with the sheet material layer, the electrical connector may be located between that layer and the insulating substrate. Alternatively, the electrical connector may be in electrical contact with the face of the sheet material layer remote from the insulating substrate.

The use of a sheet material in accordance with the first aspect of the invention (or as defined for the second aspect of the invention) as a static dissipating layer in a laminar structure comprised of an insulating substrate into a surface of which the sheet material is incorporated has a number of significant advantages. Firstly laminar structures with a narrow range of conductive properties may be produced from the sheet materials that vary in terms of basis weight, type of conducting fibre, lengths of the staple fibres, and/or relative amounts of the fibres. These parameters may readily be adjusted to provide laminate materials with the required conductive properties. Thus, for example, an increase in basis weight influences conductivity because the number of fibre to fibre contact points increases per unit area and therefore the conductivity increases. Conversely, a reduction in basis weight reduces conductivity. The amount of the cross-linked binder in the sheet material also influences sheet conductivity by virtue of the fact that the binder is an insulator, the greater the binder content the lower the conductivity. However changes in the amount of binder generally have less influence on conductivity than do changes in the basis weight.

The laminar structures in accordance with the second aspect of the invention (and static dissipation assembly in accordance with the third aspect of the invention) may be used to form components which, in use, come into contact with (or are used in the vicinity of) flammable liquids. The laminar structures and static dissipation assemblies may therefore be used for constructing tanks, reservoirs and /or pipes for use in aircraft that hold or convey flammable liquids. In such items (i.e. tanks etc.) the sheet material will be provided on at least that surface of the item that comes into contact with the flammable liquid. Although the laminar structures and static dissipation assembly have particular application for formation of components that are used in contact with, or in the vicinity of, flammable liquids, they do have other applications, e.g. structures such as radomes that must dissipate static electricity.

The laminar structures and static dissipation assemblies in accordance with the second and third aspects of the invention respectively are preferably produced from "pre-pregs" comprising insulating reinforcing fibres (e.g. glass) in a curable resin matrix.

In the case of aerospace applications, the curable resin will generally be an epoxy resin. The invention does however encompass the use of other curable resins, for aerospace and non-aerospace applications. Examples of such alternative curable resins include phenolic, polyester, vinyl ester and cyanate ester resins.

The structures and assemblies may be produced by moulding and curing techniques which are well known in the art for producing components from "pre-pregs", the only modification required being to provide a layer of the sheet material in accordance with the first aspect of the invention in the mould so that it provides a facing for the structure and (optionally) a strip or strips of conducting material (e.g. carbon "pre-preg") overlapping the sheet material where electrical contact to other components such as connectors is required.

In producing laminar structures and static dissipation assemblies by the method described in the previous paragraph, the sheet material of the invention may optionally be pre-impregnated with a curable resin system but this is not essential. Since the resin content of the "pre-preg" itself may be sufficient to bind the sheet material into the insulating body of the laminar structure without the need for additional adhesive components. However, if necessary, the sheet material may as indicated be pre-impregnated with a curable resin system to ensure a required degree of bonding in the final structure. In the case where the sheet material is pre-impregnated with a curable resin system then that resin system will preferably be of the same type as the one incorporated in the "pre-preg" forming the insulated substrate.

The formation method described above has considerable advantages for production of laminar structures and static dissipation assemblies for use in components for aircraft. More particularly, in the case where the sheet material of the first aspect of the invention is a "dry material" (i.e. is not "pre-impregnated") it can be used in conjunction with any "pre-preg" and does not invalidate the "pre-preg's" qualification (i.e. the prepeg from which the laminar structure is made does not need to be "re-qualified") . This is because there is sufficient resin in the prepreg for the relatively light sheet material to be completely wetted-out so that it becomes part of the composite structure. As such, the resin and reinforcement within the bulk of the laminar structure is unaffected by the thin layer of sheet material on the external surface(s). Similar considerations apply in the case where the sheet material is pre-impregnated with the same resin as incorporated in the pre-preg from which the laminar structure is to be produced. Therefore, all pre-pregs as currently qualified for use in production of components for aircraft may be used in the production of laminar structures and static discharge assemblies in accordance with the invention.

The invention does however encompass other manufacturing methods generally known as "Out Of Autoclave". These techniques involve the assembly of dry or partially dry fibres or fabrics onto a mould, the fibres or fabrics then being infused with resin using pressure or vacuum or a combination of both. The resin is then cured to give a composite laminate structure. Examples of the techniques are Resin Film Infusion (RFI), Resin Transfer Moulding (RTM) and Vacuum Assisted Resin Transfer Moulding (VARTM). For the purposes of the present invention, the sheet material would be incorporated into the laminate at the dry fibre stage and would also be infused with resin to form a layer of the sheet material incorporated into a surface of the substrate (e.g. incorporated into the inner and outer surfaces of the substrate).

Sheet materials in accordance with the first aspect of the invention, and for use in conjunction with the second aspect, will generally have a basis weight of 1 to 500 g m$^{-2}$, more preferably 5 to 150 g m$^{-2}$ and even more preferably 5-100 g m$^{-2}$. Usually, the sheet material will have a basis weight in the range 5 to 40 g m$^{-2}$. Sheet materials in accordance with the first aspect of the invention, and for use in conjunction with the second aspect, can be classed as fibrous sheet materials and can be of the type classed as non-woven fibrous sheet materials. Preferred sheet materials can be classed as "veils". Use of a blend of conducting and non-conducting fibres has particular advantage in the case of sheet materials having a basis weight of up to 40 g m$^{-2}$ in that, when only conductive fibres are used, small variations in basis weight can produce relatively large changes in resistance for the laminar structure, thus making it difficult to produce such structures with controlled resistance characteristics.

As detailed above, the preferred sheet material includes both conductive and non-conductive fibres (it being appreciated that there may be more than one type of conducting fibres and/or non-conducting fibre in the sheet material). Typically, both the conducting and (when present) non-conducting staple fibres will have a length in the range 3 to 50 mm, although values to the lower end of this range are generally preferred. Thus, for example, the staple fibres will preferably have a length of 5 to 25 mm, even more preferably 5 to 15 mm. Typically the conducting fibres will all be of the same length as each other. Typically also the non-conducting fibres will also be of the same length as each other. The conducting and non-conducting fibres may be of the same length as each other, but this is not essential. Both the conducting and non-conducting fibres may be of circular cross-section and have a diameter in the range 5 to 30 $\mu$m, although other cross-sections are possible.

As indicated above, the sheet material in accordance with the invention may be such that all staple fibres are conducting but it is generally preferred that the sheet material comprises an admixture of both conducting and non-conducting staple fibres. The relative amounts of conducting and non-conducing staple fibres present in the preferred embodiments of the sheet material will be dependent at least partly on the conductive properties required for the material. Typically, the sheet material will comprise up to 95% by weight of the non-conductive fibres based on the total weight of the staple fibres (conductive and non-conductive) in the sheet material, preferably *20% to 80%* by weight of the non-conductive staple fibres and even more preferably 40% to 60% on the same basis.

The conductive fibres may, for example, have an electrical resistivity of 1 x 10$^3$ to 5 x 10$^{10}$ ohm/cm, more preferably 1 x 10$^4$ to 1 x 10$^{10}$ ohm/cm, even more preferably 1 x 10$^5$ to 5 x 10$^{10}$ ohm/cm, still more preferably 3 x 10$^6$ to 5 x 10$^9$ ohm/cm and most preferably 3 x 10$^7$ to 5 x 10$^8$ ohm/cm.

The conductive fibres may consist wholly of a conductive material and may for example be carbon fibres. It is however more preferred that the conductive fibres comprise a conducting material in a non-conducting matrix, e.g. of a synthetic polymer, preferably a thermoplastic polymer. Generally, the amount of conducting material in the conducting fibre will be in the range of 1% to 60% by weight based on the total weight of the fibre and the conducting material, although more usually will be in the range of 1% to 20% and most preferably 5% to 15% on the same basis. The conducting material in the matrix may be carbon, e.g. carbon black, graphite, or nanotubes. As indicated, the non-conductive matrix for the fibres may be a synthetic polymer. Examples of polymers that may be used include polyester, polyamide, polyphenylene sulphide (PSS), polyether imide (PEI), polyetheretherketone (PEEK), polyethylene or polypropylene. As indicated, the polymer is preferably thermoplastic.

Preferred conductive fibres for use in accordance with the invention are polyester (preferably thermoplastic polyester) fibres comprising 8-12% by weight of carbon black.

The non-conductive fibres present in the preferred embodiments of sheet material in accordance with the invention serve two main functions. Firstly, they serve to control the overall conductivity of the sheet material, the greater the amount of non-conducting fibres the lower the conductivity. This is important because, for sheet materials produced only of conductive fibres, conductivity changes rapidly with basis weight (particularly for basis weights below about 35 g m$^{-2}$) and it becomes difficult to produce laminate materials (in accordance with the second aspect of the invention) for which the conductivity can be accurately controlled. Inclusion of the non-conducting fibres ensures that the conductivity of the sheet material (and laminate constructions in accordance with the first aspect of the invention produced therefrom) is less dependent on basis weight of the sheet material and therefore more accurately controlled. Secondly, the non-conductive fibres can serve to provide "handleability" characteristics for the sheet material, this particularly being the case when the non-conductive fibres are of glass.

Sheet materials in accordance with the first aspect of the invention comprise the conducting staple fibres (and preferably also the non-conducting staple fibres) bonded together by a cross-linked binder system. The binder may for example comprise a cross-linked polyester, epoxy, phenoxy, acrylic or styrene-acrylic binder. A polyester binder system in its uncured form may for example comprise a polyester dispersion together with a cross-linking system, e.g. one based on hexamethoxymethylmelanine.

The use of a cross-linked binder system has advantages in ensuring consistent resistivity for the sheet material.

Preferred binder system comprise cross-linked polyesters, although as indicated above other binder systems may be used. Preferably the sheet material in accordance with the first aspect of the invention comprises up to 20% by weight of the cross-linked binder system based on the total weight of the sheet material, more preferably up to 15% on the same basis. Typically the amount of binder will be at least 1% by weight on the basis quoted, more typically 5% on that basis. Thus preferred sheet materials in accordance with the first aspect of the invention comprise 5 to 15% by weight of the cross-linked binder system based on the total weight of the sheet material.

Sheet materials in accordance with the first aspect of the invention will generally comprise the conductive and non-conductive staple fibres uniformly distributed throughout the fibre material. The orientation of the fibres will usually be random.

The above considerations of the composition/construction of sheet materials lead to a further, fourth, aspect of the present invention, according to which there is provided a sheet material for use in static dissipation applications, said sheet material comprising conductive staple fibres, non-conductive staple fibres, and a cross-linked binder system that bonds said fibres together, wherein the sheet material comprises 40-60% by weight of the conductive staple fibres based on the total weight of the conductive and non-conductive staple fibres, the conductive fibres have a resistance of $1 \times 10^3$ to $5 \times 10^{10}$ ohm/cm.

Features described above in relation to the sheet material of the first aspect of the invention (and sheet materials for use in the second and third aspects) are also applicable to sheet materials in accordance with the fourth aspect of the invention and are the subject of claims 27 to 45.

The sheet material of the fourth aspect of the invention may be used in the production of laminar structures for use in static dissipation applications. Therefore, according to a fifth aspect of the invention, there is provided a laminar structure comprising an insulating substrate and a layer of sheet material comprising conductive staple fibres, non-conductive staple fibres, and a cross-linked binder system that bonds said fibres together, wherein the sheet material comprises 40-60% by weight of the conductive staple fibres based on the total weight of the conductive and non-conductive staple fibres, the conductive fibres have a resistance of $1 \times 10^3$ to $5 \times 10^{10}$ ohm/cm.

Correspondingly, the invention also provides (according to a sixth aspect thereof) static electricity dissipation assembly comprising a laminar structure in accordance with the fifth aspect of the invention associated with an electrical conductor in electrical contact with the sheet material layer of the laminar structure, said conductor also being for connection to an earthing point grounding the laminar structure so that any static charge developed therein is discharged to earth.

Features described above in relation to the laminar structures and static dissipation assemblies of the second and third aspects of the invention are also applicable to those of the fifth and sixth aspects of the invention.

The sheet materials of the invention may be prepared by a process which comprises the sequential steps of:

(i) forming a wet-laid material comprised of the conducting staple fibres and preferably also non-conducting staple fibres;
(ii) applying a curable binder system to the material produced in step (i); and
(iii) effecting curing of the binder system.

Step (i) may be effected by preparing an aqueous suspension of the staple fibres, the suspension comprising about 0.1% by weight of the fibres. The suspension is then wet laid onto a water pervious or water permeable support, drained and then passed through an oven to effect drying of the material. Step (i) may be a continuous process such as carried out on a conventional papermaking machine.

In step (ii), a curable binder system is applied to the wet-laid material produced in step (i). Conveniently application is by means of spraying one side of the wet-laid material with a vacuum being applied to the other side to aid penetration of the binder.

Subsequently, the binder is cured, e.g. in an autoclave at 120-200°C.

The invention will be illustrated with reference to the following non-limiting Examples and accompanying drawings, in which:

Fig. 1 is a plot of resistance vs basis weight of sheet material comprising a blend of conductive and non-conductive fibres at 1000V for composite materials produced in accordance with Example 2 using sheet materials with a range of basis weights;

Fig. 2 is a plot of resistance vs basis weight of sheet material comprising a blend of conductive and non-conductive fibres at 500V for composite materials produced in accordance with Example 3 using sheet materials with a range of basis weights;

Fig. 3 is a plot of resistance vs basis weight of sheet material comprising only conductive fibres at 1000V for composite materials produced in accordance with Example 5 using sheet materials with a range of basis weights; and

Fig. 4 is a plot of resistance vs time immersed in fuel for two sheets of materials produced in accordance with the invention and having different basis weights.

## Example 1

A range of non-woven materials ("veils") was prepared in which the fibres comprised a 50:50 w/w blend of conductive and non-conductive fibres. The conductive fibres comprised a polyester matrix containing about 10% by weight of carbon black (based on the total weight of the fibre) and had an electrical resistivity of 3 x $10^7$ to 5 x $10^8$ ohms/cm. The conductive fibres had a length of 12 ($\pm$1) mm and a diameter of about 21.5 $\mu$m. The non-conductive fibres comprised glass fibres having a length of 12 $\pm$ 1 mm and a diameter of 10-11 $\mu$m.

The veils comprised 5 to 15% by weight of a cross-linked polyester binder system that bonded the fibres together (the percentage being based on the total weight of the veil).

The veils were produced on a continuous paper making machine using the procedure outlined above and differed in their basis weights.

The tensile strengths (expressed as N/25mm) of strips of the material in both the Machine Direction ("MD") and Cross Direction ("CD") were measured. The results are shown in Table 1 below.

Table 1

| Veil sample | Basis weight (gsm) | Thickness (mm) | MD tensile strength (N/25mm) | CD Tensile Strength (N/25mm) |
|---|---|---|---|---|
| 1 | 12.7 | 0.08 | 23.5 | 0.7 |
| 2 | 17.0 | 0.10 | 29.2 | 0.8 |
| 3 | 33.2 | 0.17 | 40.2 | 3.4 |
| 4 | 54.2 | 0.30 | 115.0 | 9.6 |
| 5 | 73.4 | 0.41 | 131.3 | 11.9 |
| 6 | 101.3 | 0.49 | 145.7 | 11.2 |

The above MD and CD tensile strength values for the materials in accordance with the invention demonstrate that the materials have adequate tensile strength values for processing into composite laminar structures in accordance with the invention.

## Example 2

Glass fibre: Epoxy resin composite structures incorporating rectangular veils produced in accordance with Example 1 were prepared by the procedure described in the Appendix and using (a) Hexcel F914C-833-40 as the carbon fibre fabric, and (b) Hexcel 916G-7781-37.5 as the E glass fibre fabric.

The composite structures were prepared by the steps of:

(a) introducing the veil into a flat mould;
(b) applying two carbon/epoxy prepreg strips, one at each end of the rectangular veil (the strips being provided for the purposes of resistance measurements);
(c) applying glass fibre: epoxy resin prepreg in the mould;
(d) bagging the assembly using standard procedures; and
(e) curing in an autoclave.

During the curing process, the veil was wetted-out by resin from the prepreg and became part of the composite structure which comprised an insulating substrate (formed by the cured "pre-preg" having the veil incorporated in a surface thereof).. The carbon made a good electrical connection to the veil and could be used for connecting to a pipe fitting to ensure a continuous electrical pathway.

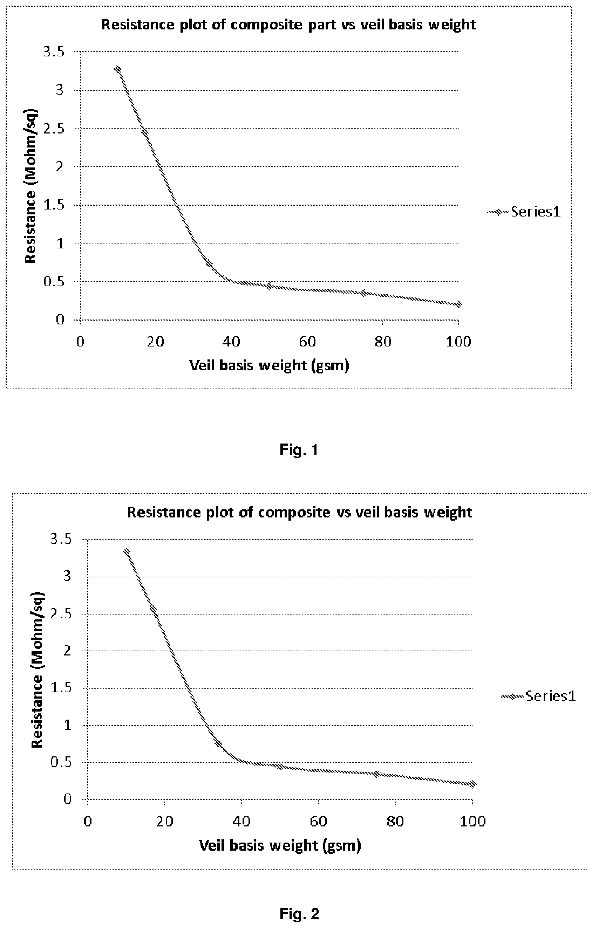

Using a potential difference of 1000 volts across the two conducting elements, electrical resistance measurements were made and the results are shown in Fig. 1 which is a plot of measured electrical resistance (of the composite structure) vs veil basis weight.

The resistance measured is, in effect, that of the veil incorporated in the surface of the substrate, since the latter is an insulator.

It can be seen from Fig. 1 that resistance of the composite structures (expressed as Mohm/sq) was in the Megaohm range with there being an initial fall in resistance of from about 3.3 Mohm/sq for a veil with a basis weight of 12.7 to about 0.7 Mohm/sq for a veil having a basis weight of 33.2 followed by a more gradual fall over the higher basis weight veils.

The rate of change of resistance between veils having basis weights of 12.7 g m$^{-2}$ and 33.2 g m$^{-2}$, although relatively rapid, is nevertheless one which allows composite materials with accurately controlled resistance characteristics to be produced.

## Example 3

Example 2 was repeated but using a potential difference of 500 V.

The results are shown in Fig. 2, which it will be noted has a very similar profile to that of Fig. 1.

## Example 4

A range of non-woven materials ("veils") were prepared in which the fibres consisted wholly of conductive fibres as used in Example 1, there being no non-conducting fibres. The veils comprised 5 to 15% by weight of a cross-linked polyester binder system that bonded the fibres together (the percentage being based on the total weight of the veil). The veils were produced by on a continuous papermaking machine using the procedure outlined above and differed in their basis weights.

The tensile strengths (expressed as N/25mm) of strips of the material in both the Machine Direction ("MD") and Cross Direction ("CD") were measured. The results are shown in Table 2 below.

Table 2

| Veil sample | Basis weight (gsm) | Thickness (mm) | MD tensile strength (N/25mm) | CD Tensile Strength (N/25mm) |
|---|---|---|---|---|
| 1 | 10.5 | 0.08 | 11.9 | 5.6 |
| 2 | 18.1 | 0.12 | 29.8 | 11.5 |
| 3 | 38.2 | 0.22 | 52.9 | 7.9 |
| 4 | 57.3 | 0.32 | 63.0 | 10.3 |
| 5 | 78.4 | 0.43 | 80.9 | 15.2 |
| 6 | 112.9 | 0.55 | 126.7 | 18.5 |

The above MD and CD tensile strength values for the materials in accordance with the invention demonstrate that the materials have adequate tensile strength values for processing into composite laminar structures in accordance with the invention.

## Example 5

The procedure described in steps (a)-(e) of Example 2 was used to produce composite structures from the veils produced in Example 4.

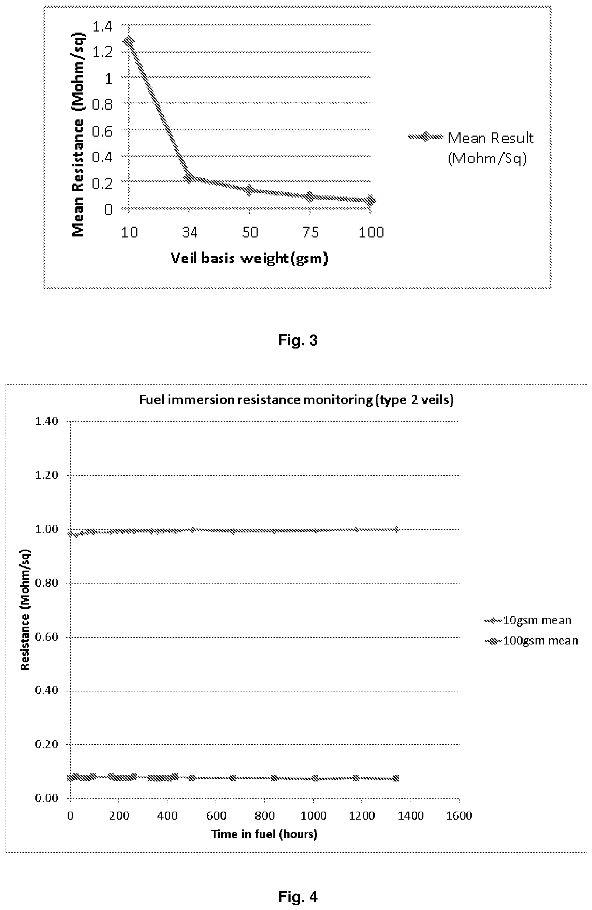

Using a potential difference of 1000 volts across the two conducting elements, electrical resistance measurements were made and the results are shown in Fig. 3 which is a plot of measured electrical resistance (of the composite structure) vs veil basis weight.

The results shown in Fig. 3 are to be contrasted with those shown in Figs. 1 and 2. In the case of Fig. 3 (i.e. for veils incorporating only conducting staple fibres), there is a drop in resistance from about 1.25 Mohm/sq for a basis weight of 10.5 g m$^{-2}$ for a composite material produced using a veil having a basis weight of 10.5 g m$^{-2}$ to about 0.2 Mohm/sq for one produced with a veil having a basis weight of 18.1. This is a much more rapid decrease in resistance than for composite materials produced in accordance with Example 2 which incorporate both conducting and non-conducting staple fibres (see the results shown in Figs. 1 and 2). With this more rapid change in resistance (for veils that do not incorporate non-conductive fibres), small variations in basis weight can produce relatively large changes in resistance, thus making it more difficult to produce composite materials with controlled resistance characteristics.

It will also be appreciated that composite materials in accordance with this Example (i.e. using veils incorporating only conductive fibres) have much lower resistances for a particular basis weight veil than composite materials produced using veils incorporating both conductive and non-conductive fibres.

### Example 6

Two non-woven materials ("veils") having mean basis weights of 10 g m$^{-2}$ and 100 g m$^{-2}$ were prepared in which the staple fibres comprised only conductive fibres (the same type as used in Example 1) there being no non-conductive fibres. The veils comprised 5 to 15% by weight of a cross-linked polyester binder system that bonded the fibres together (the percentage being based on the total weight of the veil). The veils were produced on a continuous paper making machine using the procedure outlined above .

The procedure of Example 2 was used to produce composite structures from the veils.

The composite structures were immersed in JET A-1 aviation fuel for a total period of about 1350 hours and their resistance measured at intervals during this period.

The results are shown in Figure 4 which showed that, for each of the composite structures manufactured from the different basis weight veils, the resistance maintained substantially constant over the period of the experiment. Thus, the conductive fibres were not deleteriously affected by immersion in the fuel so the veil maintained its resistance properties. The incorporation of non-conducting, glass fibres in the veil would not be anticipated to affect this result.

### Example 7

A composite structure of the type produced in Example 2 was subjected to a flexural test involving 28800 bending cycles. A range of non-woven materials ("veils") with different basis weights and comprising either solely conductive fibres (same type as used in Example 1) or a 50:50 w/w blend of the conductive fibres and glass fibres (both of the same type as used in Example 1) were prepared using the techniques described previously.

Composite structures were prepared from the veils using procedures as described above. The composite structures had a length of 210 mm and were tested for their flexural properties. For this purpose, the test samples were subjected to 3 point bending over a span of 150mm. The samples were initially deflected 2mm and then cycled +/-1mm for 28800 cycles at a frequency of 2Hz.

The resistance of the sample was measured at 500V both before and after the flexural test. The results are shown in Table 3 below, which also includes details of the fibre composition and basis weight of the sheet materials.

**Table 3**

| Veil Type | Basis Weight | Resistance Prior to Cycling (MOhms) | Resistance After Cycling (MOhms) |
|---|---|---|---|
| 100% Conductive | 100 gsm | 0.27 | 0.27 |
| 100% Conductive | 75gsm | 0.445 | 0.447 |
| 50/50 Blend | 50gsm | 2.88 | 2.91 |
| 50/50 Blend | 10gsm | 19.13 | 19.3 |

As can be seen from the results in the above Table, there was no significant variation in the resistance of each sample as measured both before and after flexural testing.

### Appendix

This Appendix describes a procedure for (a) preparing a construct which is comprised of an insulating substrate having bonded thereto, as an immobilised surface layer, a material in accordance with the first aspect of the invention, and (b) measuring the sheet resistance of the immobilised material.

The construct is prepared from the following plies of material cut in the orientation shown.

| Ply No. | Material Type | Orientation | Size |
|---|---|---|---|
| 1 (two samples) | Carbon Fibre Fabric, 5-Harness Satin Weave, 3K Tow, 280g/m$^2$, 40% Epoxy Resin Prepreg, e.g. available as Hexcel F914C-833-40 | 0° | 150mm x 30mm |
| 2 | First Aspect of the Invention | - | 210mm x 150mm |

(continued)

| Ply No. | Material Type | Orientation | Size |
|---|---|---|---|
| 3-10 | E Glass Fibre Fabric, Style 7781, 300g/m$^2$, 37.5% Epoxy Resin Prepreg, e.g. available as Hexcel 916G-7781-37.5 | 0° | 210mm x 150mm |

To prepare the construct, the above plies of material are assembled ("laid-up") in a mould 210mm x 150mm to which an even coat of a mould release agent (e.g. Freekote 770) has been applied. The following lay-up procedure is used.

(i) introduce the two plies 1 into the mould so that their longitudinal axes are parallel and that the adjacent edges of the two plies are a known distance, L, apart (e.g. 150mm);

(ii) consolidate the two plies for 5 minutes at a vacuum of 635 mm Hg than;

(iii) lay ply 2 (i.e. the material of the first aspect of the invention) on top of the two plies 1;

(iv) lay ply 3 on top of ply 2;

(v) consolidate plies 1-3; for 5 minutes at a vacuum of 635 mm Hg;

(vi) lay plies 4-7;

(vii) consolidate plies 1-7 for 5 minutes at a vacuum greater than 635 mm Hg than;

(viii) lay plies 8-10;

(ix) consolidate plies 1-10 for 5 minutes at a vacuum greater than 635 mm Hg.

A vacuum of 635mm Hg (25 inches of Hg) is then applied to the lay-up.
The lay-up is then cured (and post-cured) using the following procedure:

(a) heat to 120° °C at 3.5°C/min;

(b) at 120°C, vent the vacuum and apply pressure of 95 psi;

(c) heat to 175°C for 75 minutes;

(d) cool to below 80°C;

(e) release pressure and remove sample from mould;

(f) effect post-curing by heating at 190°C for 240 minutes.

The sheet resistance of the material of the first aspect of the invention is measured by applying a potential difference, suitably 500 V DC, across the two plies 1 (which serve as electrode tabs) and measure the resistance, R, between the two tabs as the average of 5 values using conventional sharp probes.
Sheet resistance, $R_S$, is calculated in units of ohms per square by the formula

$$R_s = R \times \frac{W}{L}$$

where R is the resistance of the sheet material in ohms (average of 5 values),
W is the width of the sheet material, and
L is the distance between the adjacent edges of the two plies 1.

**Claims**

1. A sheet material for use in static dissipation applications, said sheet material comprising conductive staple fibres and a cross-linked binder system that bonds said fibres together wherein the conductive staple fibres have a length in the range of 3 to 50mm, have a resistance of $1 \times 10^3$ to $10 \times 10^{10}$ ohm/cm and are randomly oriented and wherein the sheet material has a sheet resistance of 50 ohms/sq to $50 \times 10^7$ ohms/sq, preferably $1 \times 10^3$ ohms/sq to $3 \times 10^7$ ohms/sq, more preferably $1 \times 10^3$ ohms/sq to $1 \times 10^7$ ohms/sq, more preferably $1 \times 10^4$ ohms/sq to $1 \times 10^7$ ohms/sq and more preferably $1 \times 10^5$ ohms/sq to $5 \times 10^6$ ohms/sq.

2. A sheet material as claimed in claim 1 which comprises an admixture of non-conducting staple fibres (preferably glass fibres) and the conducting staple fibre, preferably wherein the sheet material comprises up to 95% by weight of the conductive staple fibres based on the total weight of the conductive and non-conductive staple fibres, more preferably wherein the sheet material comprises 20% to 80% by weight of the conductive staple fibres based on the total weight of the conductive and non-conductive staple fibres, and more preferably wherein the sheet material comprises 40-60% by weight of the conductive staple fibres based on the total weight of the conductive and non-conductive staple fibres.

3. A sheet material as claimed in claim 1 or 2 having a basis weight of 1 to 500 g m$^{-2}$, preferably a basis weight of 5 to 150 g m$^{-2}$, more preferably a basis weight of 5 to 100 g m$^{-2}$, and more preferably a basis weight of 5 to 40 g m$^{-2}$.

4. A sheet material as claimed in any one of claims 1 to 3 wherein the staple fibres have a length in the range of 5 to 25 mm, and more preferably wherein the staple fibres have a length in the range of 5 to 15 mm.

5. A sheet material as claimed in any one of claims 1 to 4 wherein the staple fibres are of circular cross-section and have a diameter in the range of 5 to 30μm.

6. A sheet material as claimed in any one of claims 1 to 5 wherein the conductive fibres have a resistance of $1 \times 10^4$ to $5 \times 10^{10}$ ohm/cm, more preferably $1 \times 10^5$ to $5 \times 10^{10}$ ohm/cm, more preferably $3 \times 10^6$ to $5 \times 10^9$ ohm/cm, and more preferably $3 \times 10^7$ to $5 \times 10^8$ ohm/cm.

7. A sheet material as claimed in any one of claims 1 to 6 wherein the conductive fibres comprise a non-conducting matrix containing a conductive material, preferably wherein the non-conducting matrix is a synthetic polymer and the conductive material is carbon, more preferably wherein the conductive fibres are polyester fibres containing carbon black as the conductive material.

8. A sheet material as claimed in any one of claims 1 to 7 comprising up to 20% by weight of the cross-linked binder system based on the total weight of the sheet material, preferably comprising 5 to 15% by weight of the cross-linked binder system based on the total weight of the sheet material.

9. A sheet material as claimed in any one of claims 1 to 8 wherein the binder system comprises a cross-linked polyester, epoxy, phenoxy, acrylic or styrene-acrylic binder.

10. A method of producing a sheet material as claimed in any one of claims 1 to 9 which comprises the sequential steps of:

    a. forming a wet-laid material comprised of the staple fibres;
    b. applying a curable binder system to the material produced in step (i); and
    c. effecting curing of the binder system.

11. A laminar structure comprising an insulating substrate and a layer of sheet material (preferably as claimed in any one of claims 1 to 9) comprising conductive staple fibres and a cross-linked binder system that bonds said fibres together incorporated into a surface of said substrate, wherein the conductive staple fibres have a length in the range of 3 to 50mm, have a resistance of $1 \times 10^3$ to $10 \times 10^{10}$ ohm/cm and are randomly oriented and wherein the sheet material has a sheet resistance *in situ* on the substrate of 50 ohms/sq to $5 \times 10^7$ ohms/sq, preferably wherein the sheet resistance of the sheet material *in situ* on the substrate is $1 \times 10^3$ ohms/sq to $3 \times 10^7$ ohms/sq, preferably wherein the sheet resistance of the sheet material *in situ* on the substrate is $1 \times 10^4$ ohms/sq to $1 \times 10^7$ ohms/sq, preferably $1 \times 10^5$ ohms/sq to $1 \times 10^7$ ohms/sq and more preferably $1 \times 10^5$ ohms/sq to $5 \times 10^6$ ohms/sq

12. A laminar structure as claimed in claim 11 wherein the conductive fibres have a length of 5 to 15mm and a resistance

of 3 x $10^7$ to 5 x $10^8$ ohm/cm and wherein said sheet resistance of the sheet material is 1 x $10^5$ to 5 x $10^6$ ohms/sq.

13. A laminar structure as claimed in claim 11 or 12 in the form of a tank, reservoir or pipe.

14. A static electricity dissipation assembly comprising a laminar structure as claimed in any one of claims 11 to 13 associated with an electrical conductor in electrical contact with the sheet material layer of the laminar structure, said conductor also being for connection to an earthing point grounding the laminar structure so that any static charge developed therein is discharged to earth, said static electricity dissipation assembly preferably being electrically grounded.

15. A method of forming a laminar structure comprising juxtaposing a sheet material as claimed in any one of claims 1 to 9 to a surface of a prepreg comprised of reinforcing fibres in a curable resin matrix, and effecting curing of said curable resin matrix to form a laminar structure comprised of a substrate provided by the cured prepreg and the sheet material incorporated into a surface of said substrate.

**Patentansprüche**

1. Folienmaterial zum Gebrauch in Ableitungsanwendungen von statischer Elektrizität, wobei das Folienmaterial leitende Spinnfasern und ein vernetztes Bindemittelsystem beinhaltet, welches die Fasern miteinander verbindet, wobei die leitenden Spinnfasern eine Länge in dem Bereich von 3 bis 50 mm besitzen, einen Widerstand von 1 x $10^3$ bis 10 x $10^{10}$ Ohm/cm besitzen und zufällig ausgerichtet sind und wobei das Folienmaterial einen Flächenwiderstand von 50 Ohm/sq bis 50 x $10^7$ Ohm/sq besitzt, vorzugsweise von 1 x $10^3$ Ohm/sq bis 3 x $10^7$ Ohm/sq, noch bevorzugter von 1 x $10^3$ Ohm/sq bis 1 x $10^7$ Ohm/sq, noch bevorzugter von 1 x $10^4$ Ohm/sq bis 1 x $10^7$ Ohm/sq und noch bevorzugter von 1 x $10^5$ Ohm/sq bis 5 x $10^6$ Ohm/sq.

2. Folienmaterial nach Anspruch 1, welches einen Zusatz von nicht leitenden Spinnfasern (vorzugsweise Glasfasern) und die leitenden Spinnfasern beinhaltet, vorzugsweise, bei welchem das Folienmaterial bis zu 95 Gewichtsprozent der leitenden Spinnfasern beinhaltet, basierend auf dem Gesamtgewicht der leitenden und der nicht leitenden Spinnfasern, noch bevorzugter, wobei das Folienmaterial 20 bis 80 Gewichtsprozent der leitenden Spinnfasern beinhaltet, basierend auf dem Gesamtgewicht der leitenden und der nicht leitenden Spinnfasern, und wobei das Folienmaterial noch bevorzugter 40 bis 60 Gewichtsprozent der leitenden Spinnfasern beinhaltet, basierend auf dem Gesamtgewicht der leitenden und der nicht leitenden Spinnfasern.

3. Folienmaterial nach Anspruch 1 oder 2, welches ein Grundgewicht von 1 bis 500 g m$^{-2}$ besitzt, vorzugsweise ein Grundgewicht von 5 bis 150 g m$^{-2}$, noch bevorzugter ein Grundgewicht von 5 bis 100 g m$^{-2}$, und noch bevorzugter ein Grundgewicht von 5 bis 40 g m$^{-2}$.

4. Folienmaterial nach einem der Ansprüche 1 bis 3, bei welchem die Spinnfasern eine Länge in dem Bereich von 5 bis 25 mm besitzen, und bevorzugter, bei welchem die Spinnfasern eine Länge in dem Bereich von 5 bis 15 mm besitzen.

5. Folienmaterial nach einem der Ansprüche 1 bis 4, bei welchem die Spinnfasern einen kreisförmigen Querschnitt und einen Durchmesser in dem Bereich von 5 bis 30 $\mu$m besitzen.

6. Folienmaterial nach einem der Ansprüche 1 bis 5, bei welchem die leitenden Spinnfasern einen Widerstand von 1 x $10^4$ bis 5 x $10^{10}$ Ohm/cm besitzen, noch bevorzugter von 1 x $10^5$ bis 5 x $10^{10}$ Ohm/cm, noch bevorzugter von 3 x $10^6$ bis 5 x $10^9$ Ohm/cm und noch bevorzugter von 3 x $10^7$ bis 5 x $10^8$ Ohm/cm.

7. Folienmaterial nach einem der Ansprüche 1 bis 6, bei welchem die leitenden Spinnfasern eine nicht leitende Matrix beinhalten, welche ein leitendes Material enthält, vorzugsweise, bei welchem die nicht leitende Matrix ein synthetisches Polymer ist und das leitende Material Kohlenstoff ist, noch bevorzugter, bei welchem die leitenden Fasern Polyesterfasern sind, welche Ruß als leitendes Material enthalten.

8. Folienmaterial nach einem der Ansprüche 1 bis 7, beinhaltend bis zu 20 Gewichtsprozent des vernetzten Bindemittelsystems, basierend auf dem Gesamtgewicht des Folienmaterials, vorzugsweise beinhaltend 5 bis 15 Gewichtsprozent des vernetzten Bindemittelsystems, basierend auf dem Gesamtgewicht des Folienmaterials.

**9.** Folienmaterial nach einem der Ansprüche 1 bis 8, bei welchem das Bindemittelsystem ein vernetztes Polyester-, Epoxid-, Phenoxid-, Akryl- oder ein vernetztes Styrol-Akryl-Bindemittel beinhaltet.

**10.** Verfahren zur Herstellung eines Folienmaterials nach einem der Ansprüche 1 bis 9, beinhaltend folgende, in einer Sequenz ablaufende Schritte:

    a. Bilden eines nassgelegten Materials, bestehend aus den Spinnfasern;
    b. Auftragen eines aushärtbaren Bindemittelsystems auf das in Schritt (i) gebildete Material; und
    c. Durchführen des Aushärtens des Bindemittelsystems.

**11.** Laminare Struktur, beinhaltend ein isolierendes Substrat und eine Schicht aus Folienmaterial (vorzugsweise nach einem der Ansprüche 1 bis 9), beinhaltend leitende Spinnfasern und ein vernetztes Bindemittelsystem, welches die Fasern miteinander verbindet, welches in eine Fläche des Substrates eingearbeitet ist, wobei die leitenden Spinnfasern eine Länge in dem Bereich von 3 bis 50 mm besitzen, einen Widerstand von $1 \times 10^3$ bis $10 \times 10^{10}$ Ohm/cm besitzen und zufällig ausgerichtet sind und wobei das Folienmaterial einen Flächenwiderstand in situ am Substrat von 50 Ohm/sq bis $5 \times 10^7$ Ohm/sq besitzt, wobei vorzugsweise der Flächenwiderstand des Folienmaterials in situ am Substrat von $1 \times 10^3$ Ohm/sq bis $3 \times 10^7$ Ohm/sq beträgt, wobei vorzugsweise der Flächenwiderstand des Folienmaterials in situ am Substrat von $1 \times 10^4$ Ohm/sq bis $1 \times 10^7$ Ohm/sq beträgt, vorzugsweise von $1 \times 10^5$ Ohm/sq bis $1 \times 10^7$ Ohm/sq und noch bevorzugter von $1 \times 10^5$ Ohm/sq bis $5 \times 10^6$ Ohm/sq.

**12.** Laminare Struktur nach Anspruch 11, bei welcher die leitenden Fasern eine Länge von 5 bis 15 mm und einen Widerstand von $3 \times 10^7$ bis $5 \times 10^8$ Ohm/cm besitzen und bei welcher der Flächenwiderstand des Folienmaterials $1 \times 10^5$ bis $5 \times 10^6$ Ohm/sq beträgt.

**13.** Laminare Struktur nach Anspruch 11 oder 12 in Form eines Tanks, eines Reservoirs oder eines Rohrs.

**14.** Anordnung zum Ableiten von statischer Elektrizität, beinhaltend eine laminare Struktur nach einem der Ansprüche 11 bis 13 in Verbund mit einem elektrischen Leiter in elektrischem Kontakt mit der Folienmaterialschicht der laminaren Struktur, wobei der Leiter ebenfalls zum Anschluss an einen Erdungspunkt dient, welcher die laminare Struktur erdet, so dass jegliche statische Ladung hierin an die Erde entladen wird, wobei die Anordnung zum Ableiten von statischer Elektrizität vorzugsweise elektrisch geerdet ist.

**15.** Verfahren zum Bilden einer laminaren Struktur, beinhaltend Aneinanderreihen eines Folienmaterials nach einem der Ansprüche 1 bis 9 an eine Fläche eines Prepregs, bestehend aus Verstärkungsfasern in einer aushärtbaren Harzmatrix, und Durchführen des Aushärtens der aushärtbaren Harzmatrix zum Bilden einer laminaren Struktur, bestehend aus einem Substrat, bereitgestellt durch das ausgehärtete Prepreg und das in eine Fläche des Substrats eingearbeitete Folienmaterial.

**Revendications**

**1.** Matériau en feuilles pour une utilisation dans des applications de dissipation statique, ledit matériau en feuilles comprenant des fibres discontinues conductrices et un système de liant réticulé qui lie lesdites fibres ensemble, dans lequel les fibres discontinues conductrices ont une longueur dans la plage de 3 à 50 mm, ont une résistance de $1 \times 10^3$ à $10 \times 10^{10}$ ohms/cm et sont orientées de manière aléatoire et dans lequel le matériau en feuilles a une résistance de feuilles de 50 ohms/carré à $50 \times 10^7$ ohms/carré, de préférence $1 \times 10^3$ ohms/carré à $3 \times 10^7$ ohms/carré, plus préférablement $1 \times 10^3$ ohms/carré à $1 \times 10^7$ ohms/carré, plus préférablement $1 \times 10^4$ ohms/carré à $1 \times 10^7$ ohms/carré et plus préférablement $1 \times 10^5$ ohms/carré à $5 \times 10^6$ ohms/carré.

**2.** Matériau en feuilles selon la revendication 1, qui comprend un mélange de fibres discontinues non conductrices (de préférence des fibres de verre) et de la fibre discontinue conductrice, de préférence dans lequel le matériau en feuilles comprend jusqu'à 95 % en poids des fibres discontinues conductrices sur la base du poids total des fibres discontinues conductrices et non conductrices, plus préférablement dans lequel le matériau en feuilles comprend 20 % à 80 % en poids des fibres discontinues conductrices sur la base du poids total des fibres discontinues conductrices et non conductrices, et plus préférablement dans lequel le matériau en feuilles comprend 40-60 % en poids des fibres discontinues conductrices sur la base du poids total des fibres discontinues conductrices et non conductrices.

**3.** Matériau en feuilles selon la revendication 1 ou 2 ayant un poids de base de 1 à 500 g m$^{-2}$, de préférence un poids de base de 5 à 150 g m$^{-2}$, plus préférablement un poids de base de 5 à 100 g m$^{-2}$, et plus préférablement un poids de base de 5 à 40 g m$^{-2}$.

**4.** Matériau en feuilles selon l'une quelconque des revendications 1 à 3, dans lequel les fibres discontinues ont une longueur dans la plage de 5 à 25 mm, et plus préférablement dans lequel les fibres discontinues ont une longueur dans la plage de 5 à 15 mm.

**5.** Matériau en feuilles selon l'une quelconque des revendications 1 à 4, dans lequel les fibres discontinues ont une section transversale circulaire et ont un diamètre dans la plage de 5 à 30 $\mu$m.

**6.** Matériau en feuilles selon l'une quelconque des revendications 1 à 5, dans lequel les fibres conductrices ont une résistance de 1 x 10$^4$ à 5 x 10$^{10}$ ohms/cm, plus préférablement 1 x 10$^5$ à 5 x 10$^{10}$ ohms/cm, plus préférablement 3 x 10$^6$ à 5 x 10$^9$ ohms/cm, et plus préférablement 3 x 10$^7$ à 5 x 10$^8$ ohms/cm.

**7.** Matériau en feuilles selon l'une quelconque des revendications 1 à 6, dans lequel les fibres conductrices comprennent une matrice non conductrice contenant un matériau conducteur, de préférence dans lequel la matrice non conductrice est un polymère synthétique et le matériau conducteur est le carbone, plus préférablement dans lequel les fibres conductrices sont des fibres de polyester contenant du noir de carbone en tant que matériau conducteur.

**8.** Matériau en feuilles selon l'une quelconque des revendications 1 à 7 comprenant jusqu'à 20 % en poids du système de liant réticulé sur la base du poids total du matériau en feuilles, de préférence comprenant 5 à 15 % en poids du système de liant réticulé sur la base du poids total du matériau en feuilles.

**9.** Matériau en feuilles selon l'une quelconque des revendications 1 à 8, dans lequel le système de liant comprend un liant polyester, époxy, phénoxy, acrylique ou styrène-acrylique réticulé.

**10.** Procédé de production d'un matériau en feuilles selon l'une quelconque des revendications 1 à 9 qui comprend les étapes séquentielles consistant à :

    a. former un matériau par voie humide composé des fibres discontinues ;
    b. appliquer un système de liant durcissable sur le matériau produit à l'étape (i) ; et
    c. réaliser un durcissement du système de liant.

**11.** Structure laminaire comprenant un substrat isolant et une couche de matériau en feuilles (de préférence selon l'une quelconque des revendications 1 à 9) comprenant des fibres discontinues conductrices et un système de liant réticulé qui lie lesdites fibres ensemble incorporés dans une surface dudit substrat, dans laquelle les fibres discontinues conductrices ont une longueur dans la plage de 3 à 50 mm, ont une résistance de 1 x 10$^3$ à 10 x 10$^{10}$ ohms/cm et sont orientées de manière aléatoire et dans laquelle le matériau en feuilles a une résistance de feuilles *in situ* sur le substrat de 50 ohms/carré à 5 x 10$^7$ ohms/carré, de préférence dans laquelle la résistance de feuilles du matériau en feuilles *in situ* sur le substrat est de 1 x 10$^3$ ohms/carré à 3 x 10$^7$ ohms/carré, de préférence dans laquelle la résistance de feuilles du matériau en feuilles *in situ* sur le substrat est de 1 x 10$^4$ ohms/carré à 1 x 10$^7$ ohms/carré, de préférence 1 x 10$^5$ ohms/carré à 1 x 10$^7$ ohms/carré et plus préférablement 1 x 10$^5$ ohms/carré à 5 x 10$^6$ ohms/carré.

**12.** Structure laminaire selon la revendication 11, dans laquelle les fibres conductrices ont une longueur de 5 à 15 mm et une résistance de 3 x 10$^7$ à 5 x 10$^8$ ohms/cm et dans laquelle ladite résistance de feuilles du matériau en feuilles est de 1 x 10$^5$ à 5 x 10$^6$ ohms/carré.

**13.** Structure laminaire selon la revendication 11 ou 12 sous la forme d'une cuve, d'un réservoir ou d'un tuyau.

**14.** Ensemble de dissipation d'électricité statique comprenant une structure laminaire selon l'une quelconque des revendications 11 à 13 associée à un conducteur électrique en contact électrique avec la couche de matériau en feuilles de la structure laminaire, ledit conducteur étant également prévu pour une connexion avec un point de mise à la terre mettant à la masse la structure laminaire de sorte que toute charge statique développée dans celle-ci est déchargée vers la terre, ledit ensemble de dissipation d'électricité statique étant de préférence mis à la masse électriquement.

**15.** Procédé de formation d'une structure laminaire comprenant la juxtaposition d'un matériau en feuilles selon l'une quelconque des revendications 1 à 9 avec une surface d'un préimprégné composé de fibres de renforcement dans une matrice de résine durcissable, et la réalisation du durcissement de ladite matrice de résine durcissable pour former une structure laminaire composée d'un substrat fourni par le préimprégné durci et le matériau en feuilles incorporés dans une surface dudit substrat.

**Fig. 1**

**Fig. 2**

**Fig. 3**

**Fig. 4**